# EUROPEAN PATENT SPECIFICATION

(11) **EP 4 461 511 B1**
(45) Date of publication and mention of the grant of the patent: **24.06.2026**
(21) Application number: 24174308.7
(22) Date of filing: 06.05.2024
(51) Int. Cl.: B29C 65/08, B29C 65/74, B65B 51/22, B29L 31/00

(54) **ULTRASONIC SEALING SYSTEM AND ANVIL THEREOF**
ULTRASCHALL-VERSIEGELUNGSSYSTEM UND AMBOSS DAFÜR
SYSTÈME DE SCELLEMENT PAR ULTRASONS ET ENCLUME ASSOCIÉE

(30) Priority: 12.05.2023 IT 202300009528
(43) Date of publication of application: 13.11.2024
(73) Proprietor: Tetra Laval Holdings & Finance S.A., 1009 Pully (CH)
(72) Inventor: Gentili, Luca, 44123 Modena (IT); Amenta, Adriana, 41123 Modena (IT); Fenu, Fabrizio, 41123 Modena (IT)
(74) Representative: Tetra Pak Patent Attorneys

(56) References cited:
- EP-A1- 3 978 227
- US-A1- 2020 247 066

## Description

### Technical field

The present invention relates to the field of packaging technology. More particularly, it is related to an ultrasonic sealing system and anvil thereof, as well as a method for transversal sealing a tube of packaging material using said ultrasonic sealing system.

### Background of the invention

Ultrasonic sealing technology, sometimes referred to as ultrasonic welding technology, has for many years been widely used within the food packaging industry for sealing carton packages. The ultrasonic sealing is formed by applying a pressure and generating heat by inducing ultrasonic oscillations in to the area to be sealed. This is commonly achieved by pressing the packaging material between an oscillating transducer and an anvil. The oscillations generates heat in the area which in turn causes a plastic of the packaging material to melt. The applied pressure fuses together the packaging material so as to form an hermetic seal. The generated heat is dependent on the amount of applied pressure, the distribution of the applied pressure and the oscillation amplitude. Together with further parameters, such as a sealing time and sealing energy, these need to be controlled in order to achieve a desirable seal.

An advantage with using the ultrasonic sealing technology compared to induction sealing technology, sometimes referred to as induction heating technology, is that the ultrasonic sealing technology does not require an electrically conductive material in the packaging material, such as an Aluminum foil. Thus, making the packaging material more cost-efficient and environmentally friendly.

In roll-fed packaging machines, the ultrasonic sealing technology is typically used for forming transversal seals, i.e., welds in a lower part of a tube of packaging material filled with food product, such that packages can be formed. The tube is in turn formed by joining two edges of a web of packaging material by a longitudinal seal. Because of the package design, the area to be sealed it not entirely flat, nor symmetrical. For instance, there is a region where the transversal sealing crosses the longitudinal sealing resulting in the thickness of the tube being three layers thick.

The design of the anvil to handle such deviations is critical to the performance of the sealing system. Any defects in the transversal sealing can have severe effects on the food safety of the package. Therefore, there is a need for a further improved anvil design that can provide more consistent and reliable sealing performance. Documents EP 3 978 227 A1 and US 2020/247066 A1 may be of interest for the instant description.

### Summary of the invention

The herein disclosed technology seeks to at least partly mitigate, alleviate or eliminate one or more of the above-mentioned deficiencies and disadvantages in the prior art. In particular, it is an object to provide an improved ultrasonic sealing system and anvil thereof. The present inventive concept further relates to a packaging machine comprising the ultrasonic sealing system, and a method for operating the ultrasonic sealing system.

To improve sealing performances in roll fed packaging machines, a region of the anvil corresponding to the cross between the transversal sealing and the longitudinal sealing (TS-LS cross) is commonly adapted in some way to compensate for the varying thickness of the tube, such as by providing a number of teeth which forms local peaks in pressure and heat generation in the packaging material. The design of the anvil is then constant over the remaining part over the width of the tube. However, the inventors have realized that improvements to the sealing performance can also be achieved in the peripheral sections of the tube, outside the TS-LS cross. As a result, the present inventive concept provides for an anvil with improved sealing performance over the entire width of the tube, and in particular in the peripheral sections of the tube, outside the TS-LS cross.

Various aspects and embodiments of the disclosed invention are defined below and in the accompanying independent and dependent claims.

According to a first aspect, there is provided an anvil of an ultrasonic sealing system for transversally sealing a tube of packaging material. The anvil comprises a ridge extending along a transversal direction, TD, of the anvil. The ridge comprises a mid-section. The ridge further comprises a first and a second peripheral section, arranged on either side of the mid-section. The first and second peripheral section comprises a respective first sub-portion and a respective second sub-portion. The respective first sub-portion is arranged between the mid-section and the respective second sub-portion. The first sub-portion of the ridge has a first height, h1, and the second sub-portion of the ridge has a second height, h2. The first height, h1 is different from the second height, h2.

By having the first and second peripheral section divided into a respective first and second sub-portion having different heights provides for that different characteristic of these regions can be met. Put differently, making it possible to achieve an improved sealing in view of variations in the packaging material in these regions. For instance, effects of a longitudinal sealing of the tube can be handled in an improved manner during a transversal sealing process. This is closely related to the fact that a higher height of the ridge results in a higher pressure, and thus higher heat generation in that area. This way, different regions of the tube (e.g. a TS-LS cross region, a crease line region, or an corner/edge region of the tube) can be treated differently during the sealing process.

The improved anvil may be further advantageous in that it facilitates an improved pressure and heat pattern over the entire tube. It may further increase robustness in areas where fin corners, flaps and/or crease lines are present, as well as at an edge of the tube.

The packaging material may comprise a paperboard layer and a plastic foil attached to the paperboard layer. The paperboard layer has the advantageous effect of being compressible, while the plastic foil (also herein referred to as plastic layer) can be melted by ultrasonic vibrations to form the transversal sealing. Thus, the packaging material may be void of Aluminum. Aluminum is otherwise commonly used when the transversal sealing is formed by sealing systems based on induction heating. Without the Aluminum layer, the packaging material can be made more cost-efficient and more environmentally friendly. Thus, an indirect effect of the anvil and the sealing system described is that more environmentally friendly packaging can be achieved.

The first height, h1, may be greater than the second height, h2. In other words, the height of the ridge may be reduced in an outer portion of the first and second peripheral sections respectively. This may be advantageous in that it provides for a reduced head generation in an outer part of the tube, such as at the edge of the tube. At this region, the tube may be slightly thicker due to how it is folded. Put differently, a rigidity of the packaging material provides for that the two sides of packaging material are pushed away from each other close to the edge in which an U-bent folding is made. Thus, to avoid overheating or ruptures in the package, a reduced height of the ridge in this region may be advantageous. Further, a region of the tube where crease lines are present may also be benefited from engaging the anvil where the ridge has a reduced height.

The first and second peripheral section may further comprise a respective end portion arranged at a respective distal end of the anvil. The respective end portion of the ridge may have a third height, h3. The third height, h3, may be equal to the first height, h1, of the respective first sub-portion of the ridge. The end portion of the ridge may serve as a reference point when calibrating the ultrasonic sealing system.

The difference between the first height, h1, of the respective first sub-portion of the ridge and the second height, h2, of the respective second sub-portion of the ridge may be set based on a structural property of the packaging material.

By having the heights adapted to the packaging material in this manner, more reliable transversal sealing can be achieved compared to the approach commonly used today in which properties of ultrasonic waves are adjusted without having the anvil being designed in different ways to e.g. meet different structural properties. Structural properties of the packaging material may be e.g. thickness, rigidity, number of material layers, type of material layers etc.

The difference between the first height, h1, of the respective first sub-portion of the ridge and the second height, h2, of the respective second sub-portion of the ridge may be between 0.05 and 0.3mm. More specifically, the difference may be 0.1mm. Such a difference in height provides for an improved sealing over the crease lines and/or edge of the tube.

The respective second sub-portion of the ridge may form a cut-out in the ridge. Put differently, the second sub-portion may constitute a recess or groove in the ridge.

The respective second sub-portion of the ridge may comprise a first cut-out and a second cut-out in the ridge. The second height, h2, of the second sub-portion may be the height of the ridge in the first and second cut-out.

The first and second peripheral section may further comprise a respective first transition section abutting the mid-section. A combined transversal length of the first transition section of the first and second peripheral section may be greater than a transversal length of the middle section.

The transversal length of the respective first transition section may be defined by dimensions of the package to be formed. Similarly, the transversal length of the mid-section may be defined by dimensions of the longitudinal sealing.

At least one of a width, a slope angle, and an offset, from the mid-section in the longitudinal direction of the anvil, of the second sub-portion of the ridge may be different from a width, a slope angle, and an offset, from the mid-section in the longitudinal direction of the anvil, of the first sub-portion of the ridge.

Having different ridge design in the different sub-portions may further improve the sealing performance in regards to variations in the tube.

The respective second sub-portion of the ridge, may be arranged to compensate for longitudinal crease lines of the tube of packaging material and/or an edge of the tube of packaging material, during a transversal sealing state. In other words, the second sub-portion of the ridge may, during the transversal sealing state, be positioned to engage with the crease lines and/or the edge of the tube.

The first and second peripheral section may further comprise a respective second transition section arranged between the respective first sub-portion and the respective second sub-portion of the first and second peripheral section. A respective transversal length of the first transition section may be greater than a respective transversal length of the second transition section.

According to a second aspect, there is provided an ultrasonic sealing system for transversally sealing a tube of packaging material. The ultrasonic sealing system comprises an ultrasonic generating device arranged to transmit ultrasonic vibrations into the tube. The ultrasonic sealing system further comprises an anvil according to the first aspect. The anvil is arranged opposite to the ultrasonic generating device, such that during a transversal sealing state, the tube is arranged between the ultrasonic generating device and the anvil.

The above-mentioned features of the first aspect, when applicable, apply to this second aspect as well. In order to avoid undue repetition, reference is made to the above.

According to a third aspect, there is provided a packaging machine. The packaging machine comprising a transversal sealing, TS, station for transversally seal and cut a tube of packaging material into packages. The TS station comprises an ultrasonic sealing system according to the second aspect.

The packaging machine may further comprise a packaging material, PM, reel receiver arranged to receive a PM reel. The PM reel may hold a web of PM. The PM reel receiver may be equipped with a PM reel ID reader arranged to read a PM reel identification, ID, tag on the PM reel. The TS sealing station may comprise an anvil ID reader arranged to read an anvil ID tag of the anvil. The packaging machine may further comprise a control unit comprising a processor and a memory configured to receive PM reel ID data extracted from the PM reel ID tag. The control unit may be further configured to receive anvil ID data extracted from the anvil ID tag. The control circuit may be further configured to compare the PM reel ID data with the anvil ID data to assure that the anvil is matching the packaging material provided via the PM reel.

The above-mentioned features of the first and second aspects, when applicable, apply to this third aspect as well. In order to avoid undue repetition, reference is made to the above.

According to a fourth aspect, there is provided a method performed in a packaging machine for transversally sealing a tube of packaging material using an ultrasonic sealing system according to the second aspect. The packaging material comprises a paperboard layer and a plastic foil attached to the paperboard layer. The method comprises providing a transversal sealing section of the tube of packaging material between the ultrasonic generating device and the anvil of the ultrasonic sealing system. The method further comprises generating, by the ultrasonic generating device of the ultrasonic sealing system, ultrasonic vibrations such that the plastic foil of the packaging material in the transversal sealing section at least partly melts. The method further comprises pressing together the tube in the transversal sealing section between the ultrasonic generating device and the anvil, such that a pressure is formed over the transversal sealing section causing the plastic foil to bond, thereby forming a transversal sealing.

The method may further comprise reading a PM reel identification, ID, tag on a PM reel in the packaging machine by using a PM reel ID reader. The method may further comprise reading an anvil ID tag of the anvil by using an anvil ID reader. The method may further comprise comparing anvil ID data extracted from the anvil ID tag and PM reel ID data extracted from the PM reel ID tag in a control unit. In case of mismatch between the anvil ID data and the PM reel ID data, the method may further comprise transmitting a notification of mismatching anvil and PM.

The above-mentioned features of the first, second and third aspects, when applicable, apply to this fourth aspect as well. In order to avoid undue repetition, reference is made to the above.

According to a fifth aspect, there is provided a computer program product comprising instructions, which when the program is executed by a computer, cause the computer to carry out the steps of the method according to the fourth aspect.

The above-mentioned features of the first, second, third and fourth aspects, when applicable, apply to this fifth aspect as well. In order to avoid undue repetition, reference is made to the above.

According to a sixth aspect, there is provided a non-transitory computer-readable storage medium. The non-transitory computer-readable storage medium stores one or more programs configured to be executed by one or more processors of a processing system, the one or more programs comprising instructions for performing the method according to the fourth aspect.

The above-mentioned features of the first, second, third, fourth and fifth aspects, when applicable, apply to this sixth aspect as well. In order to avoid undue repetition, reference is made to the above.

A further scope of applicability of the present disclosure will become apparent from the detailed description given below. However, it should be understood that the detailed description and specific examples, while indicating some variants of the present inventive concept, are given by way of illustration only, since various changes and modifications within the scope of the inventive concept will become apparent to those skilled in the art from this detailed description.

Hence, it is to be understood that this inventive concept is not limited to the particular steps of the methods described or component parts of the systems described as such method and system may vary. It is also to be understood that the terminology used herein is for purpose of describing particular embodiments only and is not intended to be limiting. It must be noted that, as used in the specification and the appended claim, the articles "a", "an", "the", and "said" are intended to mean that there are one or more of the elements unless the context clearly dictates otherwise. Thus, for example, reference to "a device" or "the device" may include several devices, and the like. Furthermore, the words "comprising", "including", "containing" and similar wordings do not exclude other elements or steps.

### Brief description of the drawings

The above and other aspects of the present inventive concept will now be described in more detail, with reference to appended drawings showing variants of the present inventive concept. The figures should not be considered limiting the invention to the specific variant; instead, they are used for explaining and understanding the inventive concept.

As illustrated in the figures, the sizes of layers and regions are exaggerated for illustrative purposes and, thus, are provided to illustrate the general structures of variants of the present inventive concept. Like reference numerals refer to like elements throughout.
Figure 1 is a general illustration of a packaging machine.
Figure 2 illustrates, by way of example, a package after a transversal sealing.
Figure 3 illustrates, in a cross-sectional view, an ultrasonic sealing system during a transversal sealing state.
Figure 4A illustrates a tube of packaging material from a side view.
Figure 4B illustrates, in cross-section, the tube of packaging material in a top view.
Figure 4C to 4E illustrate how the tube engages with three different examples of an anvil.
Figure 5A illustrates, by way of example, an anvil in perspective view.
Figure 5B illustrates a section of the anvil of Fig. 5A in a front view.
Figure 5C to 5E illustrates different cross sections of the anvil of Fig. 5A.
Figure 6 is a flow chart illustrating the steps of a method for transversally sealing a tube of packaging material.

### Detailed description

The present inventive concept will now be described more fully hereinafter with reference to the accompanying drawings, in which some variants of the inventive concept are shown. This inventive concept may, however, be implemented in many different forms and should not be construed as limited to the variants set forth herein; rather, these variants are provided for thoroughness and completeness, and fully convey the scope of the present inventive concept to the skilled person.

It is also to be understood that the terminology used herein is for purpose of describing particular embodiments only, and is not intended to be limiting. It should be noted that, as used in the specification and the appended claim, the articles "a", "an", "the", and "said" are intended to mean that there are one or more of the elements unless the context clearly dictates otherwise. Thus, for example, reference to "a unit" or "the unit" may refer to more than one unit in some contexts, and the like. Furthermore, the words "comprising", "including", "containing" do not exclude other elements or steps. It should be emphasized that the term "comprises/comprising" when used in this specification is taken to specify the presence of stated features, integers, steps, or components. It does not preclude the presence or addition of one or more other features, integers, steps, components, or groups thereof. The term "and/or" is to be interpreted as meaning "both" or each as an alternative.

It will also be understood that, although the term first, second, etc. may be used herein to describe various elements or features, these elements should not be limited by these terms. These terms are only used to distinguish one element from another. For example, a first peripheral section could be termed a second peripheral section, and, similarly, a second peripheral section could be termed a first peripheral section, without departing from the scope of the embodiments. The first peripheral section and the second peripheral section are both peripheral section, but they are not the same peripheral section.

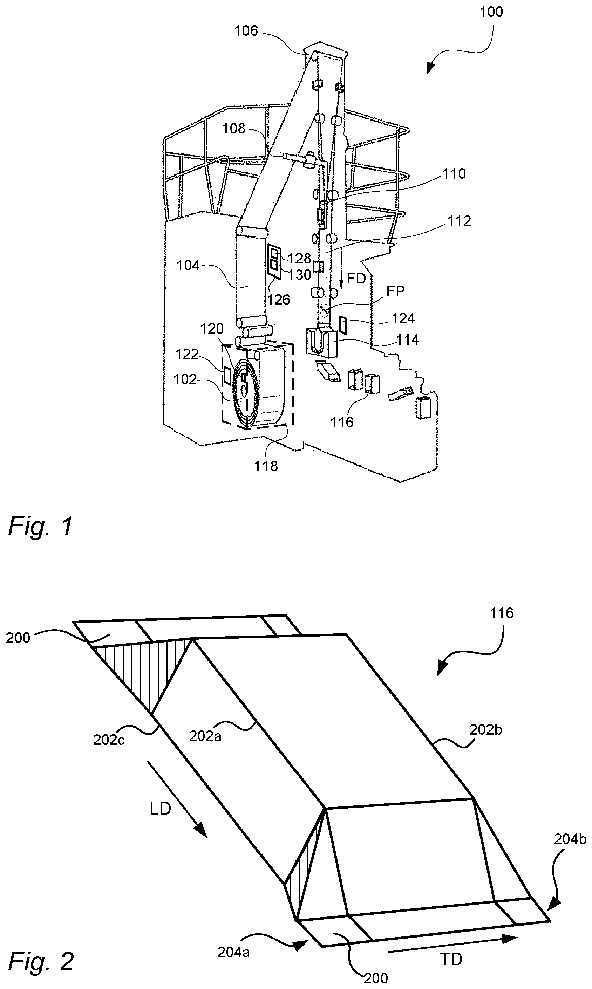

An anvil for an ultrasonic sealing system, an ultrasonic sealing system comprising the anvil, a packaging machine comprising the ultrasonic sealing system and a method for transversally sealing a tube of packaging material using the ultrasonic sealing system will now be described with reference to Fig. 1 to 6.

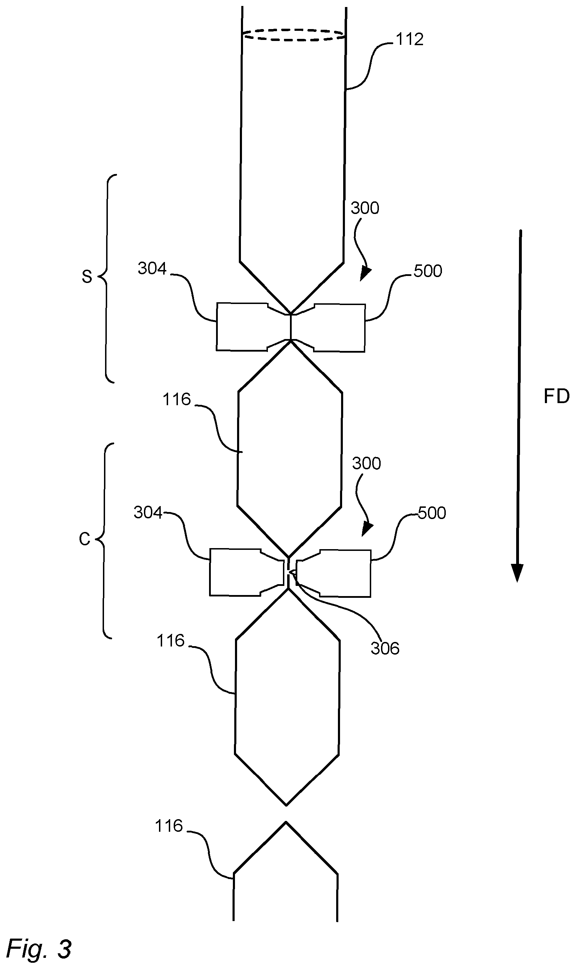

Figure 1 is a general illustration of a packaging machine 100. In the broadest form, the packaging machine 100 comprises a transversal sealing station 114 for transversally seal and cut a tube of packaging material 112 into packages 116. The packaging material may comprise a paperboard layer and a plastic foil. The plastic foil may be attached to the paperboard layer. The transversal sealing station 114 comprises an ultrasonic sealing system 300 as will be further described below in connection with Fig. 3 to 6. The packaging machine 100 may be a stand-alone packaging machine, or part of a larger food packaging or processing pipeline.

In the example illustrated in Fig. 1, the packaging machine 100 is a roll-fed packaging machine, the general principles of which will be described in the following. In such a machine, the packaging material is provided on a roll (or reel) 102 of packaging material, loaded into a reel receiver 118 of the packaging machine 100. From the roll 102 of packaging material, a web 104 of packaging material is formed. The web 104 of packaging material may pass through a sterilization station 106 for removing or reducing a number of unwanted microorganisms from the web 104. The sterilization may e.g. comprise a hydrogen peroxide bath, a Low Voltage Electron Beam (LVEB) device or any other suitable apparatus capable of meeting food safety regulations.

After sterilization, the web 104 can be formed into a tube 112, e.g. by a longitudinal sealing station 110. The tube 112 is formed by joining the two edges of the web 104 by a longitudinal sealing, LS. The wording "longitudinal" herein relates to the longitudinal direction of the web 104 or tube 112 of packaging material. Thus, the longitudinal direction coincides with a feeding direction, FD, in the packaging machine 100. When having formed the tube 112, a food product, FP, can be fed into the tube 112 via a product filling pipe 108, arranged at least partly inside the tube 112.

The filled tube 112 then reaches the transversal sealing station 114 comprising the ultrasonic sealing system 300. The wording "transversal" herein relates to a direction across the tube (i.e. a transversal direction, TD) once flattened in the transversal sealing station 114. In the transversal sealing station 114, a transversal sealing, TS, is made in a lower end of the tube 112 by using the ultrasonic sealing system 300. Generally, the ultrasonic sealing system 300 (which is further described below) has two main functions; 1) providing the transversal sealing, i.e. welding two opposite sides of the tube 112 together such that the product in a lower part of the tube 112, placed downward the ultrasonic sealing system 300, is separated from the product in the tube 112 placed upward the ultrasonic sealing system 300, and 2) cutting off the lower part of the tube such that a package 116 is formed. Alternatively, instead of providing the transversal sealing and cutting off the lower part in one and the same system 300 as illustrated, the step of cutting off the lower part may be made in a subsequent step by a different piece of equipment, or by the consumer if the packages are intended to be sold in a multi-pack.

After a package 116 has been formed, it may be folded in a folding station (not shown) thereby forming a finished food package 116.

As shown herein, the reel receiver 118 may be equipped with a reel ID reader 122 arranged to read a reel identification, ID, tag 120 on the reel 102. The reel ID tag 120 may comprise information identifying the reel. For example, the reel ID tag 120 may comprise information indicative of a type of packaging material on the reel 102, material properties of the packaging material (e.g. thickness, material composition, etc.), a type of package to be formed by the packaging material, or packaging machine settings to be used. In other words, the reel ID tag 102 may comprise information about structural properties of the packaging material. The transversal sealing station 114 may in turn comprise an anvil ID reader 124 arranged to read an anvil ID tag 512 of the anvil used in the ultrasonic sealing system 300. The anvil ID tag 512 may comprise information indicative of what anvil is being used.

The packaging machine 100 may further comprise a control unit 126 comprising a processor 128 and a memory 130. The control unit 126 may be configured to receive PM reel ID data extracted from the PM reel ID tag 120, and to receive anvil ID data extracted from the anvil ID tag 512. The control unit 126 may be further configured to compare the PM reel ID data with the anvil ID data to assure that the anvil is matching the packaging material provided via the reel 102. If not matching, the control unit 126 may transmit a notification signal, e.g. to an operator or a control system of the packaging machine 100.

Figure 2 illustrates, by way of example, a package 116 after a transversal sealing has been performed, but before it has been folded into a finished package. As herein shown, the package 116 is sealed in a transversal sealing section 200 spanning over the package from a first edge 204a of the package 116 to a second edge 204b.

Along the longitudinal direction, LD, the package is provided with a number of longitudinal crease lines 202a-c. The crease lines 202a-c should be interpreted as indentions or weakening lines. The crease lines 202a-c are typically embossed onto the packaging material during its manufacturing. The crease lines 202a-c are designed to facilitate folding of the packaging material into its intended shape. For example, as further explained below in connection with Fig. 3, the tube 112 of packaging material is, during a transversal sealing state, formed into a desired shape (e.g. a shape having a rectangular cross section). The crease lines 202a-c may in this case be provided along the corners of the package to ensure that the package is formed accurately and consistently. In the illustrated example, the package 116 comprises a first crease line 202a, a second crease line 202b, a third crease line 202c and a fourth crease line (not shown) corresponding to the four corners of the package 116. However, it should be appreciated that the number of crease lines may be two or more depending on the type or shape of the package 116.

As further shown herein, the crease lines 202a-c extend also over the transversal sealing section 200 where the transversal sealing is to be formed. Thus, as realized by the inventors, the transversal sealing can be improved further if the anvil is modified to take these into account. The tube 112 further comprises a first and second edge 204a, 204b. Due to the folding of the packaging material at the edges 204a, 204b, the inventors has realized that the transversal sealing can be even further improved if the anvil is modified with these regions in mind as well.

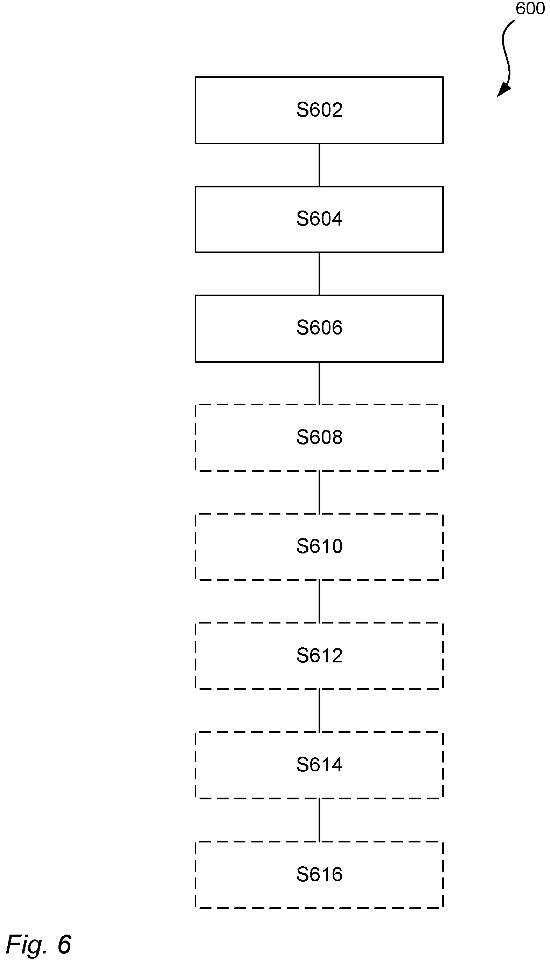

Figure 3 is a cross-sectional view of an ultrasonic sealing system 300. More specifically, Fig. 3 illustrates the general principle of the ultrasonic sealing system 300 and its process in further detail by way of example. The process of operating the ultrasonic sealing system 300 to form a transversal sealing is further described below, in connection with Fig. 6.

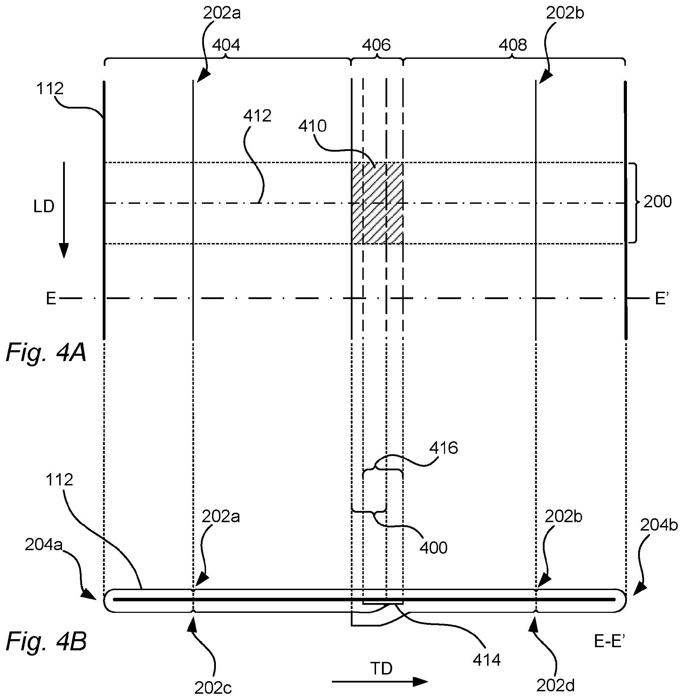

The ultrasonic sealing system 300 is configured for sealing a transversal sealing section 200 of a tube 112 of packaging material. The transversal sealing section 200, which is further illustrated in connection with Fig. 4A and 4B, comprises a first transversal edge section 404, a longitudinal sealing, LS, section 406 and a second transversal edge section 408.

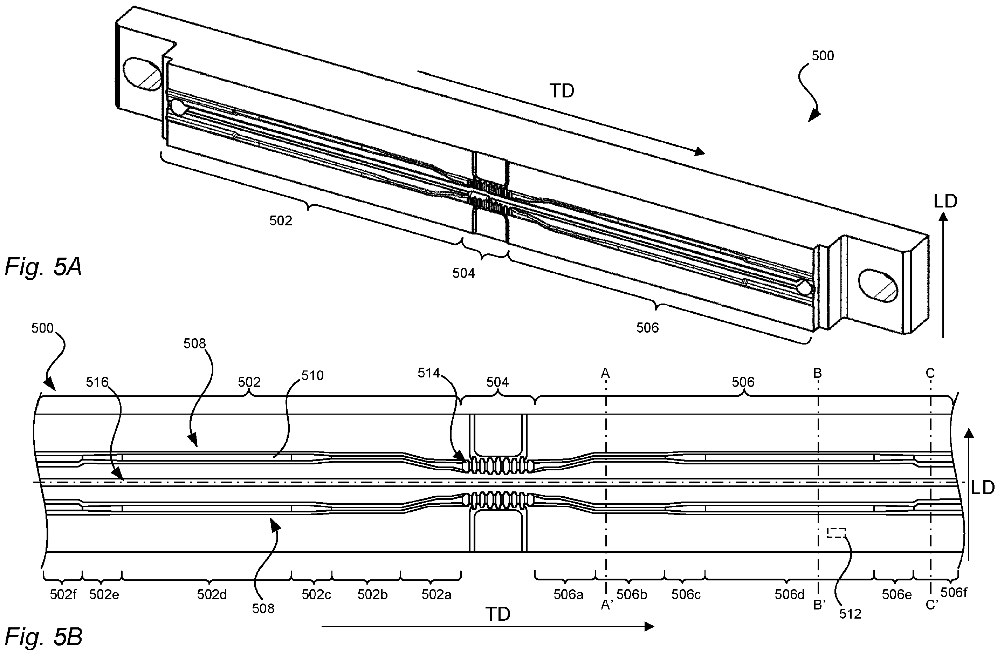

The ultrasonic sealing system 300 comprises an ultrasonic generating device 304 and an anvil 500. These are further described below, e.g. in connection with Fig. 5A to 5E. The ultrasonic sealing system 300 may comprise a plurality of pairs of ultrasonic generating devices 304 and anvils 500 arranged in a jaw system, for being able to form the transversal sealing without interrupting the continuous movement of the tube 112.

The ultrasonic generating device 304 is arranged to transmit ultrasonic vibrations into the transversal sealing section 200 of the tube 112. Thereby, heat generation may be caused in the packaging material, which in turn causes the plastic material in the transversal sealing section to at least partly melt. The anvil 500 is arranged opposite from the ultrasonic generating device 304 to give a counter force to the ultrasonic generating device 304. Thus, during the transversal sealing state, the tube 112 is arranged between the ultrasonic generating device 304 and the anvil 500. The pressure between the ultrasonic generating device 304 and the anvil 500 then causes the packaging material to fuse together.

In order to provide for a more controlled forming process of the package 116, the ultrasonic sealing system 300 may further comprise so-called volume forming flaps (not shown). More specifically, the volume forming flaps may be used to steer the tube 112 having a circular cross-section into a package having a rectangular cross-section in a controlled manner.

Turning to the process of the ultrasonic sealing system 300, the tube 112 is preferably fed from above, since this provides for that product can be held inside the tube as illustrated in Fig. 1. In a first stage, a sealing stage S, the ultrasonic generating device 304 and anvil 500 are moved towards each other, in a respective direction opposite from each other, such that two opposite sides of the tube 112 are pressed towards one another. It should be appreciated that either one of the ultrasonic generating device and the anvil may be fixed, such that only the other one is moved.

In order to provide for the transversal sealing, heat is provided in the packaging material by generating ultrasonic acoustic vibrations by the ultrasonic generating device 304. The heat provides for that a plastic layer (may also be referred to as a plastic foil, a polymer layer or a thermoplastic polymer layer) of the packaging material is at least partly melted, which in turn provides for the plastic layer can be used for making sure that the two opposite sides of the tube 112 can attach to each other and stay together after the applied pressure is removed. In a subsequent step, herein referred to as a cutting stage C, the lower part of the tube 112 can be cut off (e.g. by a knife 306) such that the package 116 is formed. In this example, the knife 306 is provided in the anvil 500. However, the knife 306 may alternatively be provided on the other side of the tube 112, in the ultrasonic generating device 304. Alternatively, the cutting step may be performed by a separate device downstream the ultrasonic sealing system 300.

In order to increase a speed in which packages are formed, the parts of the ultrasonic sealing system (e.g. the ultrasonic generating device 304, the anvil 500 and any other optional parts) can be moved together with the tube 112 in a feeding direction FD during the sealing stage S and the cutting stage C. Thus, the ultrasonic generating device 304 and the anvil 500 illustrated in the sealing state S may be the same as the ultrasonic generating device 304 and the anvil 500 in the cutting state C.

Figure 4A illustrates a tube 112 of packaging material from a side view, in a stage where it is pressed together to form the transversal sealing, TS. The wording "side view" herein refers to the case when the tube 112 is arranged in a vertical direction as seen e.g. in Fig. 3. Thus, it illustrates an outer surface of the tube 112.

Figure 4B also illustrates the tube 112, but in cross-sectional view from the top, i.e. in the cross section E-E'. It should be noted that the sizes and proportions of the different sections and areas illustrated herein should mainly be seen as examples for illustrating what is meant by the different sections and areas of the tube 112, and may not be representative of an actual tube 112 of packaging material. In particular, features of the tube 112 is herein exaggerated for illustrative purposes.

As illustrated herein, the tube 112, when flattened, can be divided (in the transversal direction, TD, of the tube) into a first transversal edge section 404 and a second transversal edge section 408. Between the first and second transversal edge section 404, 408, there is a longitudinal sealing, LS, section 406. These sections may extend along the tube 112 in the longitudinal direction. The first and second transversal edge sections 404, 408 may be seen are regions of the tube 112 being two layer thick, i.e. a 2-layer region of the tube 112.

The LS section 406 may be defined as the section where the thickness of the tube 112 is affected by the LS. The LS section 406 may in other words be seen as a 3-layer region of the tube 112. In a subsection of the LS section 406, herein referred to as the LS area 400, the tube 112 of packaging material when pressed together is three layers thick, due to how the packaging material is folded to form the LS. The LS section 406 further extends over a LS strip 414, which can be defined by an LS strip area 416. The LS strip is applied during the forming of the LS in order to provide a seal on the inside of the tube 112. The presence of the LS strip and the folding of the packaging material also affects the thickness of the tube in the LS strip area 416, which also has to be considered when forming the TS.

In the longitudinal direction, LD, (perpendicular to the TD) a transversal sealing section 200 can be defined as an area where the TS is to be formed. The TS section 200 may, as illustrated herein, define a section on either side of a cutting line 412 at which the tube 112 will be cut to form two separate packages. It should be noted that the TS formed in the TS section 200 need not to cover the entire TS section 200. The TS section 200 should rather be understood as a section which is involved during the forming of the TS, e.g. in the sense that it may come into contact with the ultrasonic generating device 304 and/or the anvil 500 during the process of forming the transversal sealing.

At a cross section between the TS section 200 and the LS section 406, a TS-LS cross 410 (or TS-LS overlap area) is formed, herein illustrated by diagonal lines.

Fig. 4A and 4B further shows a first through fourth longitudinal crease line 202a-d provided along the tube 112 in the first and second transversal edge sections 404, 406. As illustrated in Fig. 4B, the crease lines on opposite sides of the tube 112, i.e. the first and third crease line 202a, 202c, and the second and fourth crease line 202b, 202d, are aligned with each other in the transversal direction. However, in practice, the position of the crease lines 202a-d may vary to some extent due to variations in the packaging machine.

It should be further appreciated that even though the tube 112 at the first and second edge 204a, 204b are herein illustrated as having the same thickness as the rest of the first and second transversal edge section 404, 408, the tube 112 may in a region around the first and second edge 204a, 204b have a greater thickness due to the U-shaped folding of the packaging material and the rigidity of the packaging material.

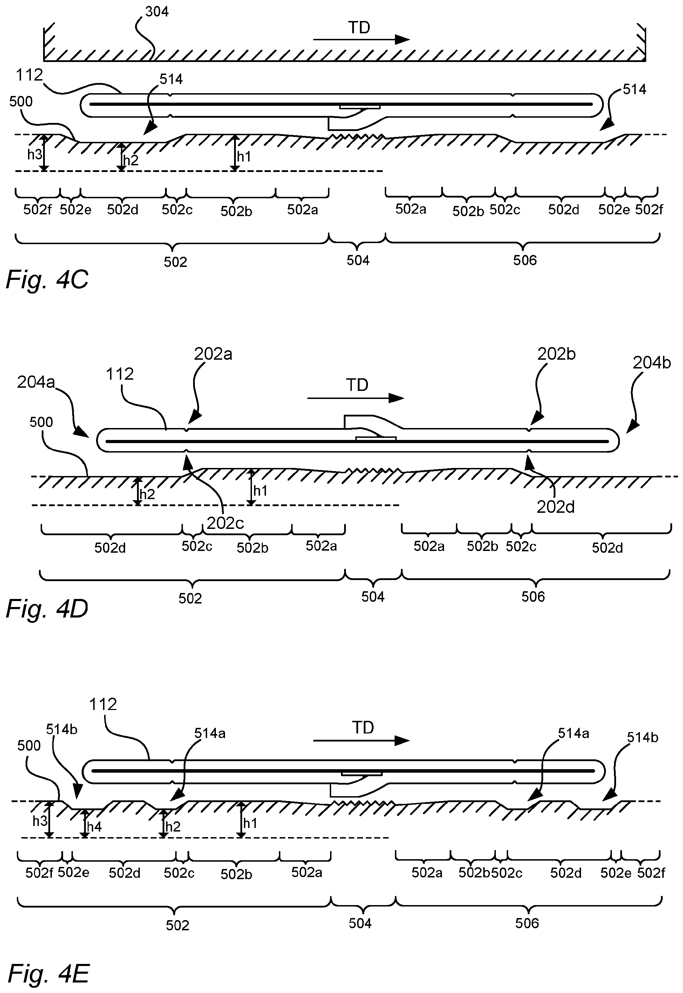

Fig. 4C to 4E, by way of example, how the tube 112 engages with the anvil 500 during the transversal sealing state. More specifically, Fig. 4C to 4E illustrates a cross section in top view (as in Fig. 4B) of the tube 112 in vicinity of an anvil 500 according to the present inventive concept. Fig. 4C further illustrates a schematic representation of the ultrasonic sealing device 304 for illustrating how the tube 112 is arranged between the anvil 500 and the ultrasonic generating device 304 during the transversal sealing state. It should be appreciated that the tube 112 may be arranged with the LS overlap towards the anvil 500, as illustrated in Fig. 4C and 4E. However, the tube 112 may alternatively be arranged with the LS overlap away from the anvil 500, as illustrated in Fig. 4D.

Fig. 4C to 4E illustrates three different examples of the anvil 500 having different designs in a respective first and second peripheral section 502, 506, which will be further explained in the following.

In general, the anvil 500 comprises a ridge 508 extending along the transversal direction of the anvil 500. The ridge 508 comprises a mid-section 504 and a first and second peripheral section 502, 506 arranged on either side of the mid-section 504. The mid-section 504 may be arranged to engage with at least a part of the LS section 406 of the tube during the transversal sealing state. The first and second peripheral section 502, 506 may be arranged to engage with at least part of the first and second transversal edge section 404, 408 of the tube 112 during the transversal sealing state.

The first and second peripheral section 502, 506 comprises a respective first sub-portion 502b, 506b, and a respective second sub-portion 502d, 506d. The respective first sub-portion 502b, 506b being arranged between the respective second sub-portion 502d, 506d and the mid-section 504. In other words, the respective second sub-portion 502d, 506d are arranged at a position further from the mid-section 504 than the respective first sub-section 502b, 506b.

Moreover, a the first sub-portion 502b, 506b of the ridge 508 has a first height, denoted by h1, and the second sub-portion 502d, 506d has a second height, denoted by h2. The first height h1 and the second height h2 are different from each other. Thus, the first and second peripheral section 502, 506 of the ridge 508 has a varying height along the transversal length of the anvil. Thus, during a transversal sealing state, the applied pressure (and thus also the generated heat) will vary across the first and second transversal edge section 404, 408 of the tube 112. In some embodiments, and as illustrated in Fig. 4C to 4E, the first height h1 may be greater than the second height h2.

The respective second sub-portion 502d, 506d of the ridge 508 may be arranged to compensate for the longitudinal crease lines 202a-d of the tube 112 of packaging material and/or an edge 204a, 204b of the tube 112 of packaging material, during a transversal sealing state. This is shown in Fig. 4C to 4E by the positioning of the tube 112 in relation to the anvil 500, where the crease lines 202a-d and the first and second end 204a, 204b are positioned in the respective second sub-portion 502d, 506d. Due to fluctuations in the web during the transversal sealing state, the position of the tube 112 in relation to the anvil 500 may differ. However, expected position of the tube 112 may be such that the crease lines 202a-d are arranged in a second transition section 502c, 506c (further explained below in connection with Fig. 5A to 5E) between the first and second sub-portion. The first and second edge 204a, 204b of the tube 112 may be arranged in the respective second sub-portion 502d, 506d.

The first and second sub-portion 502b, 506b, 502d, 506d having different heights may be realized in several different ways. In Fig. 4C to 4E, three different examples are shown. It should however be noted that the present inventive concept is not limited to these three examples. They should instead be seen as a number of nonlimiting examples. It should be further appreciated that the schematic drawings of Fig. 4C to 4E is intended solely for illustrative purposes and should not be interpreted as limiting the scope of the invention. The dimensions depicted are not necessarily indicative of real-world measurements or configurations and are provided as an example to aid in understanding the underlying concept of the invention. Those skilled in the art will appreciate that variations and modifications to the depicted dimensions and configurations may be made without departing from the scope of the invention as defined in the claims.

As illustrated in Fig. 4C, the second sub-portion 502d, 506d of the ridge may form a cut-out 514 (or recess) in the ridge 508. In other words, the ridge 508 on both sides of the second sub-portion 502d, 506d of the ridge 508 may have a greater height than the second sub-portion 502d, 506d of the ridge 508. For example, the first and second peripheral section 502, 506 may further comprise a respective end portion 502f, 506f arranged at a respective distal end of the anvil 500. In other words, the end portion 502f, 506f may constitute an outermost portion of the respective first and second peripheral section 502, 506. The respective end portion 502f, 506f of the ridge may have a third height, herein denoted h3. The third height h3 may be equal to the first height h1 of the respective first sub-portion 502a, 506a of the ridge 508. However, the third height h3 may be different than the first height h1, but still greater than the second height h2.

As illustrated in Fig. 4D, the second sub-portion 502d, 506d of the ridge 508 may extend all the way towards an end of the anvil 500. In other words, the ridge 508 may have a constant height from the transition between the first sub-portion 502b, 506d and the second sub-portion 502d, 506d to an end of the anvil 500. Put differently, an end portion 502f, 506f of the anvil 500 may have the same height as the second sub-portion 502d, 506d of the ridge 508. An effect of this may be a simplified manufacturing process.

As illustrated in Fig. 4E, the respective second sub-portion 502d, 506d of the ridge 508 may comprise a first cut-out 514a and a second cut-out 514b in the ridge 508. A height of the ridge 508 in the first cut-out 514a is the second height h2. A height of the ridge 508 in the second cut-out 514b is a fourth height h4. The fourth height h4 may be equal to the second height h2. Thus, the second height h2 of the second sub-portion 502d, 506d may be the height of the ridge 508 in the first and second cut-out 514a, 514b, as illustrated herein. Is should however be appreciated that the second height h2 in the first cut-out 514a may be different from the fourth height h4 in the second cut-out 514b. In the example of Fig. 4E, the first cut-out 514a may be arranged to compensate for the longitudinal crease lines 202a-d. Thus, the height of the ridge in the first cut-out 514a may be set so as to achieve a desirable sealing of the tube 112 at the crease lines 202a-d. The second cut-out 514b may be arranged to compensate for the edge 204a, 204b of the tube. Thus, the height of the ridge in the first cut-out 514a may be set so as to achieve a desirable sealing at the edges 204a, 204b of the tube 112.

The anvil 500 according to the present inventive concept will be further explained by the following example, as illustrated by Fig. 5A to 5E.

Figure 5A illustrates, by way of example, an anvil 500 in a perspective view. Is it to be appreciated that any features of principles described in the foregoing in connection with Fig. 4C to 4E are applicable also to the anvil 500 as described herein, and vice versa.

A longitudinal direction, LD, and a transversal direction, TD, are illustrated herein for serving as a point of reference. The LD and TD correspond to the same longitudinal and transversal directions as described above. Thus, the TD refers to the direction along which the transversal sealing is to be formed, or in other words, a transversal direction of the tube when it is sealed together (may also be referred to as welded together). Correspondingly, the LD refers to a direction along which the longitudinal sealing is formed, or in other words, a longitudinal direction of the tube.

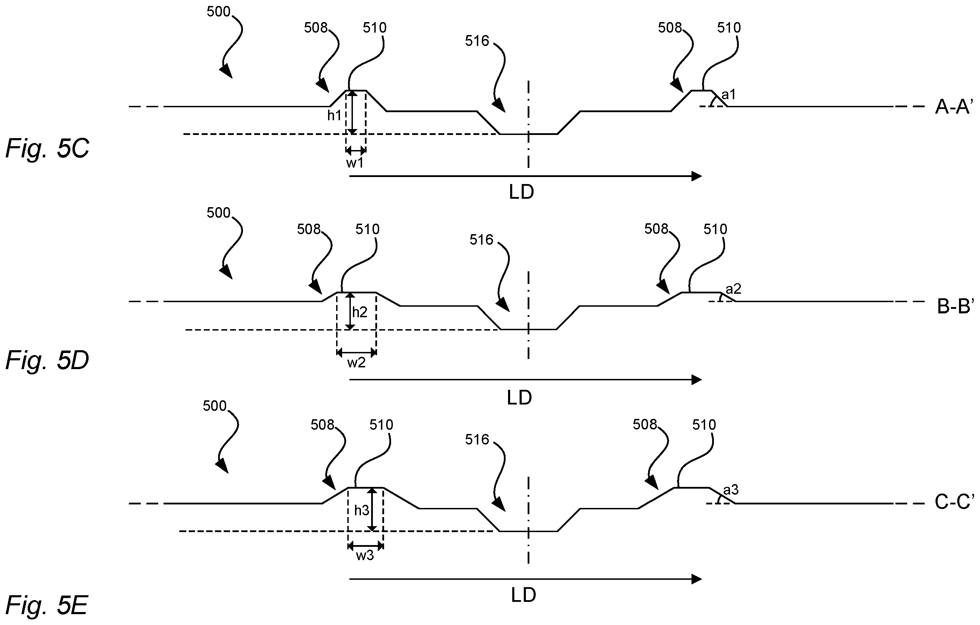

Fig. 5B illustrates a section of the anvil 500 in a front view, i.e. facing the surface which is arranged to engage with the packaging material and ultrasonic generating device during the forming of the transversal sealing. Fig. 5C to 5E illustrates three different cross sections of the anvil 500 (along the lines A-A', B-B' and C-C') for illustrating the profile of the anvil 500.

It should be appreciated that the anvil 500 illustrated herein is configured to form a transversal sealing on two opposite sides of a cutting line, separating two consecutive packages. The anvil 500 thus has two similar portions on opposite sides of a recess 516 for holing a cutting knife. Thus, the two portions are configured to form a transversal sealing in a respective package of two consecutive packages. The anvil 500 may thus be symmetrical around a center line, herein represented by the dash-dot line at the center of the recess 516. Thus, when stating e.g. that the anvil 500 comprises a ridge 508, it should also be understood that the anvil may comprise a further ridge 508, on the opposite side of the center line, as is illustrated herein. However, as is readily understood, the anvil 500 may alternatively be configured to form only one transversal sealing, i.e. the two portions of the anvil 500 may be separate elements. Thus, the anvil 500 may comprise only one ridge. In the following, the anvil 500 will mainly be described with reference to one of the portions, but the same features and aspects hold also for the other portion.

With reference to Fig. 5A and 5B the anvil comprises a ridge 508. The ridge 508 extends along the transversal direction of the anvil 500. The ridge 508 should be construed as an elongated protrusion on the anvil 500. The protrusion serving the purpose of providing a localized area with higher (or lower) pressure during the forming of the transversal sealing. This has the purpose of concentrating the pressure and the ultrasonic heat generation at a region around the ridge 508. As illustrated in the present figures, the ridge 508 may be divided into a mid-section 504, and a first and second peripheral section 502, 506 arranged on either side of the mid-section 504. The mid-section 504 is arranged to face at least a portion of the longitudinal sealing section 406 of the tube 112 (as illustrated in Fig. 4A-E) during the transversal sealing state. Thus, a transversal length of the mid-section 504 may be set based on the dimensions of the tube of packaging material to be sealed. The first and second peripheral section 502, 506 are arranged to face at least a portion of the first and second transversal edge section 404, 408 of the tube 112 respectively. The mid-section 504 of the ridge is typically designed in a way so as to handle the difference in number of packaging material layers present in the longitudinal sealing section of the tube 112 compared to on the first and second transversal edge section 404, 408. For example, the ridge 508 may have less of a protrusion (i.e. a lower height of the ridge 508) in the mid-section 504 compared to the first and second peripheral section 502, 506 to compensate for the extra layer of packaging material. In another example, and as illustrated herein, the ridge 508 may comprise a plurality of teeth 514 arranged side-by-side in the transversal direction.

The first and second peripheral section 502, 506 comprises a respective first sub-portion 502b, 506b, abutting the mid-section 504, and a respective second sub-portion 502d, 506d, abutting the first sub-portion 502b, 506b. Put differently, the respective first sub-portion 502b, 506b is arranged between the mid-section 504 and the respective second sub-portion 502d, 506d. As has been explained in the foregoing, the first sub-portion 502b, 506b of the ridge 508 has a first height h1 that is different from a second height h2 of the second sub-portion 502d, 506d of the ridge 508. In the present example, the first height h1 is greater than the second height h2.

In the illustrated example of Fig. 5A to 5E, the second sub-portion 502d, 506d is realized as a cut-out, or recess in the ridge, as also explained in connection with Fig. 4C above. However, as is readily understood by the person skilled in the art, other designs may be possible as well, such as the concepts illustrated in Fig. 4D and 4E.

In the illustrated example, the first and second peripheral section 502, 506 further comprises a respective end portion 502f, 506f arranged at a respective distal end of the anvil 500. In other words, the respective end portion 502f, 506f are abutting the second sub-portion 502d, 506d of the ridge 508. The respective end portion 502f, 506f of the ridge has a third height h3. The third height h3 may be equal to the first height h1 of the respective first sub-portion 502a, 506a of the ridge 508, as depicted herein. However, the third height h3 may be different from the first height h1. The ridge may transition from the second sub-portion 502d, 506d to the end portion 502f, 506f over a respective third transition section 502e, 506e. The respective end portion 502f, 506f may constitute a portion of the anvil 500 at which the tube 112 of packaging material, during normal operation of the transversal sealing state, does not come in contact with. The end portion 502f, 506f may thus serve as a reference point when calibrating the ultrasonic sealing system. More specifically, the end portion 502f, 506f may serve as a flat surface of the anvil 500 with a well-defined position from the ultrasonic generating device.

In the illustrated example, the first and second peripheral section 502, 506 further comprises a respective first transition section 502a, 506a. The transition section 502a, 506a are arranged at an end of the respective first and second peripheral section 502, 506 abutting the mid-section 504. In other words, the first transition section 502a, 506a provides a transition from the mid-section 504 of the ridge 508 to the first sub-portion 502b, 506b of the ridge 508. A combined transversal length of the first transition section 502a, 506a (i.e. a width in the transversal direction of the brackets indicating the first transition section 502a, 506a) of the first and second peripheral section 502, 506 may be greater than a transversal length of the middle section 504.

As explained in the foregoing, the respective second sub-portion 502d, 506d of the ridge 508 is arranged to compensate for longitudinal crease lines 202a-d of the tube 112 of packaging material and/or an edge of the tube 112 of packaging material, during a transversal sealing state. Thus, a transversal length of the first and second sub-portion, 502b, 506b, 502d, 506d (or put differently, a ratio between the first and second sub-portion, 502b, 506b, 502d, 506d over the transversal length of the first and second peripheral section 502, 506 respectively) may be set such the second sub-portion 502d, 506d are arranged at an expected position of the crease lines and/or edge of the tube. In other words, the transition between the first and second sub-portion, 502b, 502d in the first peripheral section 502 may be set based on an expected position of the first and third longitudinal crease line 202a, 202c as illustrated in Fig. 4B such that the crease lines 202a, 202c and the first edge 204a engages with the second sub-portion 502d of the ridge 508. Correspondingly, the transition between the first and second sub-portion, 506b, 506d in the second peripheral section 506 may be set based on an expected position of the second and fourth longitudinal crease line 202b, 202d such that the crease lines 202b, 202d and the second edge 204b engages with the second sub-portion 506d. Due to fluctuations in the tube 112 during the transversal sealing state, the position of the crease lines 202a-d may not be exact. A gradual transition between the first and second sub-portion, 502b, 506b, 502d may mitigate this variation in position. The first and second peripheral section 502, 506 may thus further comprise a respective second transition section 502c, 506c arranged between the respective first sub-portion 502b, 506b and the respective second sub-portion 502d, 506d. The respective transversal length of the first transition section 502a, 506b may be greater than a respective transversal length of the second transition section 502c, 506c. Thus, a smoother transition may be achieved between the mid-section 504 and the first sub-portion 502b, 506b, than the transition between the first sub-portion 502b, 506b and the second sub-portion 502d, 506d. The relatively sharper transition of the second transition section 502c, 506c can be achieved due to the crease lines 202a-d having a relatively short extension in the transversal direction. Thus, a more precise pressure distribution may be provided for around this region.

Further, the transversal length of the first and second sub-portion, 502b, 506b, 502d, 506d may be set based on a structural property of the packaging material of the tube. The structural property may for instance be a rigidity of the packaging material, a thickness of the packaging material, a number of layers of material, a material type (e.g. parameters relating to heat capacity of the material, viscosity of the material, mechanical strength of the material, etc.), how it was manufactured, etc. In case of a multilayered carton-based packaging material is used, the structural properties may also include structural properties of the individual layers, such as the thickness, type of material, etc. Further, the structural properties may also include properties of the crease lines, such as width, compression degree, etc. The anvil 500 may comprise an anvil ID tag 512. The anvil ID tag 512 allows for identification of the anvil 500, and linking it with a certain packaging material, e.g. through its structural properties.

Turning now to Fig. 5C to 5E, three cross sections of the anvil 500 along the lines A-A', B-B' and C-C' are shown. More specifically, a profile of the surface of the anvil 500 arranged to face the ultrasonic generating device during the transversal sealing state is shown. Fig. 5C thus illustrates the profile in the first sub-portion 502b, 506b of the ridge 508. Fig. 5D illustrates the profile in the second sub-portion 502d, 506d of the ridge 508. Fig. 5E illustrates the profile in the optional end portion 502f, 506f of the ridge 508. The vertical dash-dot line illustrates the center line of the anvil 500 in the center of the recess 516.

As explained in the foregoing, the first sub-portion 502b, 506b of the ridge 508 has a first height h1, and the second sub-portion 502d, 506d of the ridge 508 has a second height h2, the first height h1 being greater than the second height h2. In some embodiments, a difference between the first height h1 and the second height h2 may be between 0.05 and 0.3 mm. More preferably, the first height is 0.1mm greater than the second height h2. However, it should be noted that the difference between the first height h1 and the second height h2 may be set based on structural properties of the packaging material. The above mentioned measurements are preferred e.g. for a packaging material having at least a mid-layer made of carton (or paperboard), an inner polymer layer (towards the product), and an outer polymer layer (towards an outside of the package), together having a thickness of 0.5 to 3mm.

The anvil 500 according to the present inventive concept may have additional parameters of the ridge 508 vary across the first and second peripheral section 502, 506. For instance, at least one of a width (i.e. of a crest 510 of the anvil, in the longitudinal direction), a slope angle, and an offset (from the mid-section 504 in the longitudinal direction of the anvil 500) of the second sub-portion 502d, 506d of the ridge 508 may be different from a width, a slope angle, and an offset of the first sub-portion 502b, 506b of the ridge 508. In the present example, the first sub-portion 502b, 506b of the ridge 508 has a width w1 and a slope angle a1. The second sub-portion 502d, 506d of the ridge 508 has a width w2 and a slope angle a2. In the end portion 502f, 506f, the ridge has a width w3, a slope angle a3, and a height h3. The heights of the ridge 508 are herein illustrated with reference to a common reference point. It should be appreciated that the height of the ridge 508 may be defined from any suitable point of the anvil. The slope angle should, as illustrated in Fig. 5C to 5E, be understood as the angle on which the sides (i.e. the surface between the crest 510 and the bottom of the ridge) of the ridge 508 is slanted.

The illustrated sizes of the heights, widths and angles should merely be seen as relative sizes for the present example, but not limiting for the scope of the inventive concept. For example, as apparent from Fig. 5C to 5E, the width w1 of the first sub-portion 502b, 506b of the ridge 508 is in the present example smaller than the width w2 of the second sub-portion 502d, 506d. It should be appreciated that the numerical values of the measurements may vary from what is illustrated herein. For instance, the exact measurements of the anvil 500 depends on what packaging material is used, and what dimension the package to be produced has.

Figure 6 is a flow chart illustrating the steps of a method 600 for transversally sealing a tube 112 of packaging material using the ultrasonic sealing system 300 as described above. The method 600 is performed in a packaging machine 100, for instance by the control unit 126 of the packaging machine 100. The method 600 may be seen as a method for operating the ultrasonic sealing system 300. The packaging material comprises a paperboard layer and a plastic foil attached to the paperboard layer. In the following, the different steps are described in more detail with reference to Fig. 6. Even though illustrated in a specific order, the steps of the method 600 may be performed in any suitable order, in parallel, as well as multiple times. For example, steps S608 to S616, as will be further discussed below, may be performed before, during or after the steps S602 to S606.

The method 600 comprises providing S02 a transversal sealing section 200 of the tube 112 of packaging material between the ultrasonic generating device 304 and the anvil 500 of the ultrasonic sealing system 300.

The method 600 further comprises generating S604, by the ultrasonic generating device 304 of the ultrasonic sealing system 300, ultrasonic vibrations, such that the plastic foil of the packaging material in the transversal sealing section 200 at least partly melts.

The method 600 further comprises pressing S606 together the tube 112 in the transversal sealing section 200 between the ultrasonic generating device 304 and the anvil 500, such that a pressure is formed over the transversal sealing section 200 causing the plastic foil to bond, thereby forming a transversal sealing.

It should be noted that the steps of generating S604 the ultrasonic vibrations and pressing S606 together the tube in the transversal sealing section may be performed simultaneously.

The method 600 may further comprise reading S608 a PM reel identification, ID, tag 120 on a PM reel 102 in the packaging machine 100 by using a PM reel ID reader 122.

The method 600 may further comprise reading S610 an anvil ID tag 512 of the anvil 500 by using an anvil ID reader 124.

The method 600 may further comprise comparing S612 anvil ID data extracted from the anvil ID tag 512 and PM reel ID data extracted from the PM reel ID tag 120 in a control unit 126.

The method 600 may further comprise, in case of mismatch between the anvil ID data and the PM reel ID data, transmitting S614 a notification of mismatching anvil and PM. The notification signal may e.g. be transmitted to a control system of the packaging machine 100, or to a machine operator.

The method 600 may further comprise, in case of a non-match between the anvil ID data and the PM ID data, halting S616 production of the packages.

It will also be appreciated that when the present disclosure is described in terms of a method, it may also be embodied in apparatus or device comprising one or more processors, one or more memories coupled to the one or more processors, where computer code is loaded to implement the method. For example, the one or more memories may store one or more computer programs that perform the steps, services and functions of the method disclosed herein when executed by the one or more processors in some embodiments.

Additionally, variations to the disclosed variants can be understood and effected by the skilled person in practicing the claimed invention, from a study of the drawings, the disclosure, and the appended claims.

## Claims

1. An anvil (500) of an ultrasonic sealing system (300) for transversally sealing a tube (112) of packaging material, said anvil (500) comprising a ridge (508) extending along a transversal direction (TD) of the anvil (500), wherein the ridge (508) comprises:
a mid-section (504), and
a first and a second peripheral section (502, 506), arranged on either side of the mid-section (504), wherein the first and second peripheral section (502, 506) comprises a respective first sub-portion (502b, 506b) and a respective second sub-portion (502d, 506d), wherein the respective first sub-portion (502b, 506b) is arranged between the mid-section (504) and the respective second sub-portion (502d, 506d), and
wherein the first sub-portion (502b, 506b) of the ridge (508) has a first height (h1) and the second sub-portion (502d, 506d) of the ridge (508) has a second height (h2), wherein the first height (h1) is different from the second height (h2),
wherein the first and second peripheral section (502, 506) further comprises a respective first transition section (502a, 506a) abutting the mid-section (504),
**characterized in that** a combined transversal length of the first transition section (502a, 506a) of the first and second peripheral section (502, 506) is greater than a transversal length of the middle section (504).

2. The anvil (500) according to claim 1, wherein the first height (h1) is greater than the second height (h2).

3. The anvil (500) according to claim 1 or 2, wherein the first and second peripheral section (502, 506) further comprises a respective end portion (502f, 506f) arranged at a respective distal end of the anvil (500), and
wherein the respective end portion (502f, 506f) of the ridge has a third height (h3), wherein the third height (h3) is equal to the first height (h1) of the respective first sub-portion (502a, 506a) of the ridge (508).

4. The anvil (500) according to any of the claims 1 to 3, wherein the difference between the first height (h1) of the respective first sub-portion (502b, 506b) of the ridge (508) and the second height (h2) of the respective second sub-portion (502d, 506d) of the ridge (508) is between 0.05 and 0.3mm, preferably 0.1mm.

5. The anvil (500) according to any of the claims 1 to 4, wherein the respective second sub-portion (502d, 506d) of the ridge (508) forms a cut-out (514) in the ridge (508).

6. The anvil (500) according to any of the claims 1 to 5, wherein the respective second sub-portion (502d, 506d) of the ridge (508) comprises a first cut-out (514a) and a second cut-out (514b) in the ridge (508), and wherein the second height (h2) of the second sub-portion (502d, 506d) is the height of the ridge (508) in the first and second cut-out (514a, 514b).

7. The anvil (500) according to any of the claims 1 to 6, wherein at least one of a width, a slope angle, and an offset, from the mid-section (504) in the longitudinal direction of the anvil (500), of the second sub-portion (502d, 506d) of the ridge (508) is different from a width, a slope angle, and an offset, from the mid-section (504) in the longitudinal direction of the anvil (500), of the first sub-portion (502b, 506b) of the ridge (508).

8. The anvil (500) according to any of the claims 1 to 7, wherein the respective second sub-portion (502d, 506d) of the ridge (508), are arranged to compensate for longitudinal crease lines (202a-d) of the tube (112) of packaging material and/or an edge of the tube (112) of packaging material, during a transversal sealing state.

9. The anvil (500) according to any of the claims 1 to 8, wherein the first and second peripheral section (502, 506) further comprises a respective second transition section (502c, 506c) arranged between the respective first sub-portion (502b, 506b) and the respective second sub-portion (502d, 506d) of the first and second peripheral section (502, 506),
wherein a respective transversal length of the first transition section (502a, 506a) is greater than a respective transversal length of the second transition section (502c, 506c).

10. An ultrasonic sealing system (300) for transversally sealing a tube (112) of packaging material, the ultrasonic sealing system (300) comprises:
an ultrasonic generating device (304) arranged to transmit ultrasonic vibrations into the tube (112), and
an anvil (500) according to any of the claims 1 to 9, arranged opposite to the ultrasonic generating device (304), such that during a transversal sealing state, the tube (112) is arranged between the ultrasonic generating device (304) and the anvil (500).

11. A packaging machine (100) comprising a transversal sealing (TS) station (114) for transversally seal and cut a tube of packaging material (112) into packages (116), wherein the TS station (114) comprises an ultrasonic sealing system (300) according to claim 10.

12. The packaging machine according to claim 11, wherein the difference between the first height (h1) of the respective first sub-portion (502b, 506b) of the ridge (508) and the second height (h2) of the respective second sub-portion (502d, 506d) of the ridge (508) is set based on a structural property of the packaging material.

13. A method (600) performed in a packaging machine (100) for transversally sealing a tube (112) of packaging material using an ultrasonic sealing system (300) according to claim 10, wherein the packaging material comprises a paperboard layer and a plastic foil attached to the paperboard layer, the method (600) comprising:
providing (S602) a transversal sealing section of the tube (112) of packaging material between the ultrasonic generating device (304) and the anvil (500) of the ultrasonic sealing system (300),
generating (S604), by the ultrasonic generating device (304) of the ultrasonic sealing system (300), ultrasonic vibrations such that the plastic foil of the packaging material in the transversal sealing section at least partly melts, and
pressing (S606) together the tube (112) in the transversal sealing section between the ultrasonic generating device (304) and the anvil (500), such that a pressure is formed over the transversal sealing section (302) causing the plastic foil to bond, thereby forming a transversal sealing.

14. A computer program product comprising instructions, which when the program is executed by a computer, cause the computer to carry out the steps of the method (600) of claim 13 in the packaging machine according to claims 11 or 12.

## Patentansprüche

1. Ein Amboss (500) eines Ultraschall-Versiegelungssystems (300) zum Querversiegeln eines Schlauchs (112) aus Verpackungsmaterial, wobei der Amboss (500) eine sich entlang einer Querrichtung (TD) des Ambosses (500) erstreckende Rippe (508) umfasst, wobei die Rippe (508) umfasst:
einen Mittelabschnitt (504) und
einen ersten und einen zweiten Randabschnitt (502, 506), die zu beiden Seiten des Mittelabschnitts (504) angeordnet sind, wobei der erste und der zweite Randabschnitt (502, 506) jeweils einen ersten Teilabschnitt (502b, 506b) und einen zweiten Teilabschnitt (502d, 506d) umfassen, wobei der jeweilige erste Teilabschnitt (502b, 506b) zwischen dem Mittelabschnitt (504) und dem jeweiligen zweiten Teilabschnitt (502d, 506d) angeordnet ist, und
wobei der erste Teilabschnitt (502b, 506b) der Rippe (508) eine erste Höhe (h1) und der zweite Teilabschnitt (502d, 506d) der Rippe (508) eine zweite Höhe (h2) aufweist, wobei sich die erste Höhe (h1) von der zweiten Höhe (h2) unterscheidet,
wobei der erste und der zweite Umfangsabschnitt (502, 506) ferner jeweils einen ersten Übergangsabschnitt (502a, 506a) aufweisen, der an den Mittelabschnitt (504) angrenzt,
**dadurch gekennzeichnet, dass** eine kombinierte Querlänge des ersten Übergangsabschnitts (502a, 506a) des ersten und des zweiten Randabschnitts (502, 506) größer ist als eine Querlänge des Mittelabschnitts (504).

2. Der Amboss (500) nach Anspruch 1, wobei die erste Höhe (h1) größer ist als die zweite Höhe (h2).

3. Der Amboss (500) nach Anspruch 1 oder 2, wobei der erste und der zweite Umfangsabschnitt (502, 506) ferner jeweils einen Endabschnitt (502f, 506f) aufweisen, der an einem jeweiligen distalen Ende des Ambosses (500) angeordnet ist, und
wobei der jeweilige Endabschnitt (502f, 506f) der Rippe eine dritte Höhe (h3) aufweist, wobei die dritte Höhe (h3) gleich der ersten Höhe (h1) des jeweiligen ersten Teilabschnitts (502a, 506a) der Rippe (508) ist.

4. Der Amboss (500) nach einem der Ansprüche 1 bis 3, wobei die Differenz zwischen der ersten Höhe (h1) des jeweiligen ersten Teilabschnitts (502b, 506b) der Rippe (508) und der zweiten Höhe (h2) des jeweiligen zweiten Teilabschnitts (502d, 506d) des Stegs (508) zwischen 0,05 und 0,3 mm, vorzugsweise 0,1 mm, beträgt.

5. Der Amboss (500) nach einem der Ansprüche 1 bis 4, wobei der jeweilige zweite Teilabschnitt (502d, 506d) der Rippe (508) eine Aussparung (514) in der Rippe (508) bildet.

6. Der Amboss (500) nach einem der Ansprüche 1 bis 5, wobei der jeweilige zweite Teilabschnitt (502d, 506d) der Rippe (508) eine erste Aussparung (514a) und eine zweite Aussparung (514b) in der Rippe (508) umfasst, und wobei die zweite Höhe (h2) des zweiten Teilabschnitts (502d, 506d) der Höhe der Rippe (508) in der ersten und zweiten Aussparung (514a, 514b) entspricht.

7. Der Amboss (500) nach einem der Ansprüche 1 bis 6, wobei mindestens einer der folgenden Werte - Breite, Neigungswinkel und Versatz vom Mittelabschnitt (504) in Längsrichtung des Ambosses (500) - des zweiten Teilabschnitts (502d, 506d) des Stegs (508) von der Breite, dem Neigungswinkel und dem Versatz des ersten Teilabschnitts (502b, 506b) des Stegs (508) in Längsrichtung des Ambosses (500) ab, der vom Mittelabschnitt (504) ausgeht.

8. Der Amboss (500) nach einem der Ansprüche 1 bis 7, wobei die jeweiligen zweiten Teilabschnitte (502d, 506d) der Sicke (508) so angeordnet sind, dass sie Längsfaltenlinien (202a-d) des Schlauchs (112) aus Verpackungsmaterial und/oder eine Kante des Schlauchs (112) aus Verpackungsmaterial während eines Quer-Siegelzustands ausgleichen.

9. Der Amboss (500) nach einem der Ansprüche 1 bis 8, wobei der erste und der zweite Umfangsabschnitt (502, 506) ferner jeweils einen zweiten Übergangsabschnitt (502c, 506c) aufweisen, der zwischen dem jeweiligen ersten Teilabschnitt (502b, 506b) und dem jeweiligen zweiten Teilabschnitt (502d, 506d) des ersten und zweiten Umfangsabschnitts (502, 506) angeordnet ist,
wobei eine jeweilige Querlänge des ersten Übergangsabschnitts (502a, 506a) größer ist als eine jeweilige Querlänge des zweiten Übergangsabschnitts (502c, 506c).

10. Ultraschall-Siegelvorrichtung (300) zum Quersiegeln eines Schlauchs (112) aus Verpackungsmaterial, wobei die Ultraschall-Siegelvorrichtung (300) umfasst:
eine Ultraschallerzeugungsvorrichtung (304), die so angeordnet ist, dass sie Ultraschallschwingungen in den Schlauch (112) überträgt, und
einen Amboss (500) gemäß einem der Ansprüche 1 bis 9, der der Ultraschallerzeugungsvorrichtung (304) gegenüberliegend angeordnet ist, so dass während eines Querversiegelungszustands der Schlauch (112) zwischen der Ultraschallerzeugungsvorrichtung (304) und dem Amboss (500) angeordnet ist.

11. Verpackungsmaschine (100) mit einer Quersiegelstation (TS) (114) zum Quersiegeln und Schneiden eines Schlauchs aus Verpackungsmaterial (112) in Verpackungen (116), wobei die TS-Station (114) ein Ultraschallsiegel-System (300) gemäß Anspruch 10 umfasst.

12. Verpackungsmaschine nach Anspruch 11, wobei die Differenz zwischen der ersten Höhe (h1) des jeweiligen ersten Teilabschnitts (502b, 506b) der Sicke (508) und der zweiten Höhe (h2) des jeweiligen zweiten Teilabschnitts (502d, 506d) des Stegs (508) auf der Grundlage einer strukturellen Eigenschaft des Verpackungsmaterials festgelegt wird.

13. Verfahren (600), das in einer Verpackungsmaschine (100) zum Querversiegeln eines Schlauchs (112) aus Verpackungsmaterial unter Verwendung eines Ultraschall-Versiegelungssystems (300) gemäß Anspruch 10 durchgeführt wird, wobei das Verpackungsmaterial eine Kartonschicht und eine an der Kartonschicht befestigte Kunststofffolie umfasst, wobei das Verfahren (600) umfasst:
Bereitstellen (S602) eines Quersiegelabschnitts des Schlauchs (112) aus Verpackungsmaterial zwischen der Ultraschallerzeugungsvorrichtung (304) und dem Amboss (500) des Ultraschallsiegelungssystems (300),
Erzeugen (S604) von Ultraschallschwingungen durch die Ultraschallerzeugungsvorrichtung (304) des Ultraschall-Siegelungssystems (300), derart, dass die Kunststofffolie des Verpackungsmaterials im Quer-Siegelabschnitt zumindest teilweise schmilzt, und
Zusammenpressen (S606) des Schlauchs (112) im Quersiegelabschnitt zwischen der Ultraschallerzeugungsvorrichtung (304) und dem Amboss (500), so dass über dem Quersiegelabschnitt (302) ein Druck entsteht, der bewirkt, dass die Kunststofffolie miteinander verbunden wird, wodurch eine Quersiegelung gebildet wird.

14. Ein Computerprogrammprodukt, das Anweisungen umfasst, die, wenn das Programm von einem Computer ausgeführt wird, den Computer veranlassen, die Schritte des Verfahrens (600) nach Anspruch 13 in der Verpackungsmaschine gemäß den Ansprüchen 11 oder 12 auszuführen.

## Revendications

1. Enclume (500) d'un système de scellage par ultrasons (300) destinée à sceller transversalement un tube (112) en matériau d'emballage, ladite enclume (500) comprenant une arête (508) s'étendant dans une direction transversale (TD) de l'enclume (500), dans laquelle l'arête (508) comprend :
une section médiane (504), et
une première et une deuxième sections périphériques (502, 506), disposées de part et d'autre de la section médiane (504), dans lequel la première et la deuxième sections périphériques (502, 506) comprennent respectivement une première sous-partie (502b, 506b) et une deuxième sous-partie (502d, 506d), dans lequel la première sous-partie respective (502b, 506b) est disposée entre la section médiane (504) et la deuxième sous-partie respective (502d, 506d), et
dans laquelle la première sous-partie (502b, 506b) de la nervure (508) présente une première hauteur (h1) et la deuxième sous-partie (502d, 506d) de la nervure (508) présente une deuxième hauteur (h2), la première hauteur (h1) étant différente de la deuxième hauteur (h2),
dans lequel les première et deuxième sections périphériques (502, 506) comprennent en outre une première section de transition respective (502a, 506a) venant en butée contre la section médiane (504),
**caractérisé en ce que** la longueur transversale combinée de la première section de transition (502a, 506a) des première et deuxième sections périphériques (502, 506) est supérieure à la longueur transversale de la section médiane (504).

2. L'enclume (500) selon la revendication 1, dans laquelle la première hauteur (h1) est supérieure à la deuxième hauteur (h2).

3. L'enclume (500) selon la revendication 1 ou 2, dans laquelle les première et deuxième sections périphériques (502, 506) comprennent en outre une partie d'extrémité respective (502f, 506f) disposée à une extrémité distale respective de l'enclume (500), et
dans lequel la partie d'extrémité respective (502f, 506f) de la nervure présente une troisième hauteur (h3), la troisième hauteur (h3) étant égale à la première hauteur (h1) de la première sous-partie respective (502a, 506a) de la nervure (508).

4. Enclume (500) selon l'une quelconque des revendications 1 à 3, dans laquelle la différence entre la première hauteur (h1) de la première sous-partie respective (502b, 506b) de la crête (508) et la deuxième hauteur (h2) de la deuxième sous-partie respective (502d, 506d) de la crête (508) est comprise entre 0,05 et 0,3 mm, de préférence 0,1 mm.

5. L'enclume (500) selon l'une quelconque des revendications 1 à 4, dans laquelle la deuxième sous-partie respective (502d, 506d) de la crête (508) forme une découpe (514) dans la crête (508).

6. L'enclume (500) selon l'une quelconque des revendications 1 à 5, dans laquelle la deuxième sous-partie respective (502d, 506d) de la crête (508) comprend une première découpe (514a) et une deuxième découpe (514b) dans la crête (508), et dans lequel la deuxième hauteur (h2) de la deuxième sous-partie (502d, 506d) correspond à la hauteur de la nervure (508) dans les première et deuxième découpes (514a, 514b).

7. L'enclume (500) selon l'une quelconque des revendications 1 à 6, dans laquelle au moins l'un parmi une largeur, un angle d'inclinaison et un décalage, par rapport à la section médiane (504) dans la direction longitudinale de l'enclume (500), de la deuxième sous-partie (502d, 506d) de la arête (508) est différent de la largeur, de l'angle d'inclinaison et du décalage, par rapport à la section médiane (504) dans la direction longitudinale de l'enclume (500), de la première sous-partie (502b, 506b) de la arête (508).

8. L'enclume (500) selon l'une quelconque des revendications 1 à 7, dans laquelle les deuxièmes sous-parties respectives (502d, 506d) de la nervure (508) sont agencées pour compenser les lignes de pliage longitudinales (202a-d) du tube (112) de matériau d'emballage et/ou un bord du tube (112) de matériau d'emballage, pendant un état de scellage transversal.

9. L'enclume (500) selon l'une quelconque des revendications 1 à 8, dans laquelle les première et deuxième sections périphériques (502, 506) comprennent en outre une deuxième section de transition respective (502c, 506c) disposée entre la première sous-partie respective (502b, 506b) et la deuxième sous-partie respective (502d, 506d) des première et deuxième sections périphériques (502, 506),
dans lequel une longueur transversale respective de la première section de transition (502a, 506a) est supérieure à une longueur transversale respective de la deuxième section de transition (502c, 506c).

10. Système de scellage par ultrasons (300) destiné à sceller transversalement un tube (112) en matériau d'emballage, le système de scellage par ultrasons (300) comprenant :
un dispositif générateur d'ultrasons (304) agencé pour transmettre des vibrations ultrasonores dans le tube (112), et
une enclume (500) selon l'une quelconque des revendications 1 à 9, disposée en face du dispositif générateur d'ultrasons (304), de telle sorte que, pendant un état de scellage transversal, le tube (112) soit disposé entre le dispositif générateur d'ultrasons (304) et l'enclume (500).

11. Machine d'emballage (100) comprenant une station de scellage transversal (TS)
(114) destinée à sceller transversalement et à découper un tube de matériau d'emballage (112) en emballages (116), dans laquelle la station TS (114) comprend un système de scellage par ultrasons (300) selon la revendication 10.

12. Machine d'emballage selon la revendication 11, dans laquelle la différence entre la première hauteur (h1) de la première sous-partie respective (502b, 506b) de la nervure (508) et la deuxième hauteur (h2) de la deuxième sous-partie respective (502d, 506d) de la nervure (508) est déterminée en fonction d'une propriété structurelle du matériau d'emballage.

13. Procédé (600) mis en œuvre dans une machine d'emballage (100) pour sceller transversalement un tube (112) de matériau d'emballage à l'aide d'un système de scellage par ultrasons (300) selon la revendication 10, dans lequel le matériau d'emballage comprend une couche de carton et une feuille de plastique fixée à la couche de carton, le procédé (600) comprenant :
la mise en place (S602) d'une section de scellage transversal du tube (112) de matériau d'emballage entre le dispositif générateur d'ultrasons (304) et l'enclume (500) du système de scellage par ultrasons (300),
générer (S604), à l'aide du dispositif générateur d'ultrasons (304) du système de scellage par ultrasons (300), des vibrations ultrasoniques de telle sorte que la feuille de plastique du matériau d'emballage dans la section de scellage transversale fonde au moins partiellement, et
presser (S606) le tube (112) dans la section de scellage transversale entre le dispositif générateur d'ultrasons (304) et l'enclume (500), de telle sorte qu'une pression s'exerce sur la section de scellage transversale (302), provoquant la liaison de la feuille de plastique, formant ainsi un scellage transversal.

14. Produit logiciel comprenant des instructions qui, lorsque le programme est exécuté par un ordinateur, amènent l'ordinateur à exécuter les étapes du procédé (600) selon la revendication 13 dans la machine d'emballage selon les revendications 11 ou 12.
